# EUROPÄISCHE PATENTSCHRIFT

(11) **EP 1 422 951 B1**
(45) Veröffentlichungstag und Bekanntmachung des Hinweises auf die Patenterteilung: **15.03.2006**
(21) Anmeldenummer: 03090377.7
(22) Anmeldetag: 06.11.2003
(51) Int. Cl.: H04Q 3/00

(54) **Verfahren zum Ausführen eines Rückrufs in einem Telekommunikationsnetz**
Method for performing a call-back in a telecommunications network
Méthode pour exécuter un rappel automatique dans un réseau de télécommunications

(30) Priorität: 21.11.2002 DE 10254887
(43) Veröffentlichungstag der Anmeldung: 26.05.2004
(73) Patentinhaber: SIEMENS AKTIENGESELLSCHAFT, 80333 München (DE)
(72) Erfinder: Berg, Andreas, Dr., 13591 Berlin (DE); Van Ballaer, Bart, 13629 Berlin (DE)

(56) Entgegenhaltungen:
- EP-A- 1 168 856
- US-A- 6 128 503

## Beschreibung

Die Erfindung betrifft ein Verfahren zum Ausführen eines erzwungenen Rückrufs in einem Telekommunikationsnetz mit einer Telekommunikationseinrichtung, insbesondere einem Mobiltelefon, mit einer Rufnummer und mindestens einem intelligenten Teilnetz, welches eine mobile Dienstvermittlungsstelle und eine Dienststeuereinrichtung aufweist.

Im Zusammenhang mit modernen Telekommunikationsnetzen ist es bekannt, dass neben den Grunddiensten, wie zum Beispiel dem Telefon- oder Faksimiledienst, weitere Dienste eingerichtet sind, die von einem Teilnehmer des Telekommunikationsnetzes angesprochen werden oder infolge der Abwicklung eines Anrufs ausgeführt werden. Solche Dienste werden als intelligente Dienste bezeichnet. Telekommunikationsnetze, die diese intelligenten Dienste unterstützen, werden als intelligente Netze bezeichnet. Für Mobilfunknetze nach dem GSM-Standard (GSM - "Global System for Mobile Communication") wurde eine sogenannte CAMEL-Plattform (CAMEL - "Customized Applications for Mobile network Enhanced Logic") definiert, um eine weltweite Nutzung der Leistungsmerkmale des intelligenten Netzes zu ermöglichen. Das intelligente Netzwerk verfügt über sogenannte Dienstvermittlungsstellen (M-SSP - "Mobile Service Switching Point") und Dienststeuereinrichtungen (SCP - "Service Control Point") zur Steuerung und Durchführung von intelligenten Diensten. Die Kommunikation zwischen den Dienstvermittlungsstellen und den Dienststeuereinrichtungen erfolgt mittels des CAP-Protokolls (CAP - "CAMEL Application Part", vgl. Standardisierungsschrift: GSM 09.78). Das CAP-Protokoll, welches einen Satz von Funktionalitäten umfasst, wurde/wird phasenweise eingeführt. Das Protokoll der Phase 1, CAP1-Protokoll, umfasst lediglich einen Teil der Funktionalitäten. Mit dem eingeschränkten Befehlssatz des CAP1-Protokolls lassen sich nicht alle intelligenten Dienste ausführen. Daher verfügen die meisten Dienstvermittlungsstellen und Dienststeuereinrichtungen von intelligenten Netzen zusätzlich über die Fähigkeit, mittels eines INAP-Protokolls (INAP - "Intelligent Network Application Part") zu kommunizieren. Das INAP-Protokoll weist die volle Funktionalität des CAP-Protokolls auf.

Um Nutzern, deren Anrufe über eine Vermittlungsstelle ausgeführt werden, die nur mittels des CAP1-Protokolls kommunizieren kann, die Möglichkeit einzuräumen, alle verfügbaren intelligenten Dienste zu nutzen, wurden Verfahren entwickelt, das Telefonat zu einer Dienstvermittlungsstelle zu leiten (routen), die statt des CAP1-Protokolls das umfangreichere INAP-Protokoll verwendet.

Mit den Erweiterungen des CAP2-Protokolls sollte das Umleiten (Rerouten) zu einer anderen Dienstvermittlungsstelle aus Sicht der Netzplattform nicht mehr nötig sein. Dennoch existieren Lösungen, die die Fähigkeit besitzen, die mittels des CAP2-Protokolls vermittelten Anrufe umzuleiten bzw. zu rerouten. Die Entscheidung, ob ein Umleitungsverfahren (Rerouting) ausgeführt wird oder nicht, fällt derzeit die Plattform anhand der Protokollversion (CAP1 oder CAP2), eines Servicekeys und weiterer Parameter (z.B. SMS-Indikation).

Bei der Ausführung von mit einem Anruf verknüpften intelligenten Diensten, die auf den Befehlssatz des CAP2-Protokolls angewiesen sind, treten Fälle auf, in denen ein Umleiten aus der Plattformsicht keinen Sinn macht. D. h. der intelligente Dienst kann aus Sicht der Komponenten, die für eine Vermittlung des Anrufs erforderlich sind, initiiert und ausgeführt werden. Eine flexible Dienstlogik (FSL), die auf einer Dienststeuereinrichtung ausgeführt wird, kann jedoch feststellen, dass bei einem Aufbau einer Sprechverbindung bestimmte für eine bequeme und reibungslose Abwicklung erforderliche Daten nicht zu der Stelle mit übermittelt werden, an der der intelligente Dienst ausgeführt werden wird. Dieses Problem lässt sich bei Telekommunikationsnetzen nach dem Stand der Technik durch das Einleiten eines Umleitungsverfahrens (Rerouting Process) beheben. Das Einleiten des Umleitungsverfahrens für den Anruf ist umständlich: Erkennt der Dienst nachträglich , dass ein Umleitungsverfahren ausgeführt werden muss, wird die flexible Dienstlogik beendet und das Umleitungsverfahren angestoßen. Dieses bewirkt, wie dem Fachmann bekannt ist, ein Abspeichern der CAP2:IDP-Nachricht-Parameter (IDP - "Initial Detection Point"), ein Generieren einer Korrelations-ID (ID - "Identification"), ein Aufsetzen einer CAP2:CONNECT-Nachricht zur Vermittlungsstelle, über die der Anruf in das Telekommunikationsnetz gelangt, das Rerouten zu einem M-SSP des HPLMN, von wo aus per INAP der zweite Dialog mit dem SCP angestoßen wird.

Aus der europäischen Patentanmeldung EP 1 168 856 A1 ist ein Verfahren zum Steuern eines Aufrufes eines intelligenten Netzdienstes in einer mit einem mobilen Kommunikationsnetz verbindbaren vermittlungstechnischen Einrichtung bekannt. Bei diesem Verfahren wird überprüft, ob ein oder mehrere intelligente Netzdienstidentifizierer in in der vermittlungstechnischen Einrichtung gespeicherten Informationen aktiviert sind, die das Ziel einer Kommunikationsverbindung betreffen. Aufgrund des Resultats des Überprüfungsschrittes wird entschieden, ob ein intelligenter Netzdienst aufgerufen werden soll. Wenn es sich bei einem Anruf um einen an eine Mobilstation zu leitenden Anruf handelt, dann wird ein Vergleich eines gespeicherten Vergleichswertes mit einem momentanen Wert eines Bedingungsparameters der Mobilstation durchgeführt; die Entscheidung betreffend das Aufrufen des intelligenten Netzdienstes hängt vom Resultat dieses Vergleiches ab.

Aus der Patentschrift US 6,128,503 ist ein Verfahren zum Koordinieren von Diensten in mobilen Kommunikationsnetzen mit IN (Intelligent Network)-Diensten bekannt. Insbesondere wird in der Patentschrift ein Verfahren zum Überwachen einer möglichen betrügerischen Umgehung einer vom Operator veranlassten Anrufsperrung beschrieben.

Aufgabe der Erfindung ist es, ein Verfahren zu schaffen, das das Umleiten eines Anrufes für den Fall überflüssig macht, bei dem eine Dienststeuereinrichtung feststellt, dass ein intelligenter Dienst des intelligenten Netzes nicht oder nur unter erschwerten Bedingungen korrekt ausgeführt werden kann, falls mit dem Rufaufbau, ohne ein Umleitungsverfahren einzuleiten, nach einem Verfahren gemäß des Standes der Technik fortgefahren wird.

Die Aufgabe wird erfindungsgemäß durch ein Verfahren nach Anspruch 1 gelöst.

Beim Ausführen des erfindungsgemäßen Verfahrens wird wesentlich weniger Signalisierungsverkehr als beim Ausführen eines Umleitungsverfahren eines Telefongesprächs erzeugt. Hierdurch wird die Belastung für das Telekommunikationsnetz gesenkt. Darüber hinaus bietet die Erfindung für den Betreiber des intelligenten Dienstes den Vorteil, dass er einen höheren Anteil an den Verbindungsgebühren erhält, sofern sich der Nutzer, von dem der erste Ruf initiiert wurde, in einem fremden Netz befindet. Dies liegt daran, dass bei einem netzüberschreitenden Telefongespräch üblicherweise 70 Prozent der Gesprächsgebühren dem Netzbetreiber zustehen, von dem aus der Anruf aufgebaut wird.

Eine vorteilhafte Weiterbildung der Erfindung kann vorsehen, dass vor dem Initiieren des Aufbaus des Rückrufs der Ruf ausgelöst (abgebrochen, beendet) wird. Dies bietet den Vorteil, dass die Leitungen, über die eine Verbindung zu der Telekommunikationseinrichtung besteht, wieder freigegeben werden, bevor der Rückruf eingeleitet wird.

Eine andere vorteilhafte Ausführungsform der Erfindung kann vorsehen, dass vor dem Auslösen des Rufs der Telekommunikationseinrichtung (MS) eine Nachricht, insbesondere eine Ansage übermittelt wird. Somit erfährt der Nutzer der Telekommunikationseinrichtung, dass der Abbruch seines Telefonats nicht aufgrund einer Netzstörung erfolgt. Darüber hinaus kann dem Nutzer der Telekommunikationseinrichtung mitgeteilt werden, dass ein Rückruf seitens des intelligenten Netzes erfolgen wird, so dass der Nutzer nicht einen erneuten Anrufversuch unternehmen wird, was seine Erreichbarkeit für den Aufbau des Rückrufs verringern würde.

Zusätzlich ist es vorteilhaft, dass das Initiieren des Aufbaus der zweiten Verbindung des Rückrufs erst erfolgt, wenn der Rückruf von der Telekommunikationseinrichtung angenommen wurde ("answer"). Dieses bietet den Vorteil, dass eine Verbindung zu der gewünschten Rufnummer nur in dem Fall aufgebaut wird, in dem auch eine Rückrufverbindung zu der Telekommunikationseinrichtung aufgebaut werden kann. Dies entlastet das Netz von vergeblichen Verbindungsaufbauten zwischen der mobilen Dienstvermittlungsstelle und der gewünschten Rufnummer.

Eine andere Ausführungsform der Erfindung kann vorsehen, dass das Analysieren der ersten Daten in einer flexiblen Dienstlogik erfolgt, die auf der Dienststeuereinrichtung ausgeführt wird. Die Analyse der ersten Daten mittels einer flexiblen Dienstlogik bietet den Vorteil, dass bei der Analyse komplexe Verfahrensabläufe schnell und zuverlässig ausgeführt werden können, um sicherzustellen, dass die Telefonate sicher erkannt werden, für die ein erzwungener Rückruf durchgeführt werden muss.

Eine vorteilhafte Weiterbildung der Erfindung kann darin bestehen, dass die flexible Dienstlogik vor dem Initiieren des Aufbaus der zweiten Verbindung des Rückrufs weitere Verfahrensschritte ausführt, nachdem der Rückruf von der Telekommunikationseinrichtung angenommen wurde ("answer"). Dieses räumt die Möglichkeit ein, dass von der flexiblen Dienstlogik bereits Leistungen erbracht werden können, die ansonsten erst bei der Vermittlung im intelligenten Netz oder bei der gewünschten Rufnummer ausgeführt werden.

Eine bevorzugte Ausführungsform kann vorsehen, dass das Initiieren des Aufbaus des Rückrufs mittels einer ICA-Nachricht erfolgt. Der Vorteil liegt darin, dass der Rückruf mittels eines Standardbefehls eingeleitet wird.

Eine Weiterbildung der Erfindung kann darin bestehen, dass das Initiieren des zweiten Verbindungsaufbaus mittels einer CONNECT-Nachricht erfolgt. Auch dies bietet den Vorteil, dass der Verbindungsaufbau zu der gewünschten Rufnummer mittels eines Standardbefehls eingeleitet wird, der die benötigten zweiten Daten für die Ausführung des Dienstes umfassen kann.

Die Erfindung wird im folgenden anhand eines Ausführungsbeispieles unter Bezugnahme auf eine Zeichnung näher erläutert. Hierbei zeigen:
- Figur 1: eine schematische Darstellung eines intelligenten Telekommunikationsnetzes; und
- Figur 2: eine schematische Darstellung zum Erläutern eines erfindungsgemäßen Verfahrensablaufs.

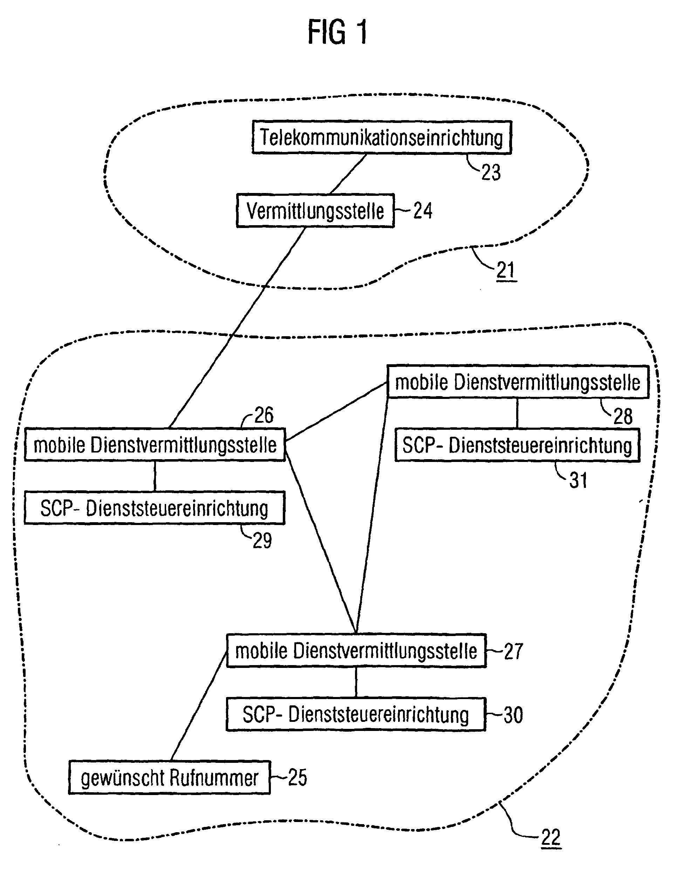

Figur 1 zeigt eine schematische Darstellung eines Telekommunikationsnetzes mit verschiedenen Teilnetzen 21, 22. Die verschiedenen Teilnetze 21, 22 können unterschiedlichen Netzwerkbetreibern gehören und in verschiedenen Staaten lokalisiert sein. Die verschiedenen Teilnetze 21, 22 können eine unterschiedliche "Intelligenz" aufweisen. Zum einen gibt es Teilnetze 21, die zwar in der Lage sind, den Aufruf von intelligenten Diensten zu unterstützen, jedoch bei der Abwicklung bestimmter Dienste Schwierigkeiten verursachen, da sie zum Beispiel nicht alle für die Ausführung eines Dienstes erforderlichen Daten bei einem Verbindungsaufbau des Rufs an den Dienst übermitteln. So kann es sein, dass für einen Ruf von einer Telekommunikationseinrichtung 23 über eine Vermittlungsstelle 24 aus dem Teilnetz 21 eine Verbindung zu einem gewünschten Teilnehmer 25 über eine mobile Dienstvermittlungsstellen 26 und eine weitere mobile Dienstvermittlungsstelle 27 in dem Teilnetz 22 aufgebaut wird, wobei die Telefonnummer der Telekommunikationseinrichtung 23 nicht mit zu dem gewünschten Teilnehmer 25 übermittelt wird oder aufgrund technischer Fehler im Verlauf der Übermittlung verloren geht. Die Telefonnummer, bei der es sich beispielsweise um eine MSISDN-Nummer der Telekommunikationseinrichtung 23 handelt, kann z. B. zur Identifizierung der Telekommunikationseinrichtung 23, die den Ruf initiiert hat, für die Ausführung eines intelligenten Dienstes, der mit dem gewünschten Teilnehmer verknüpft ist, erforderlich sein.

Teilnetze 22, die bei der Abwicklung von intelligenten Diensten Schwierigkeiten dieser Art nicht verursachen, werden hier im folgenden als intelligente Teilnetze (IN) bezeichnet. Komponenten intelligenter Teilnetze, wie mobile Dienstvermittlungsstellen 26, 27, 28, Dienststeuereinrichtungen 29, 30, 31 usw., kommunizieren miteinander, z. B. alle nach einem INAP-Protokoll, das die volle Funktionalität gemäß des CAP-Protokolls gewährleistet.

Bei dem im folgenden beschriebenen Ausführungsbeispiel wird angenommen, dass die Telekommunikationseinrichtung 23 (MS), die insbesondere ein Mobiltelefon sein kann, in dem intelligenten Teilnetz 22 registriert ist und zu einer Rufnummer (CgPA - "Calling Party Address") der Telekommunikationseinrichtung 23 eine Mailbox in dem intelligenten Teilnetz 22 eingerichtet ist. Ein angebotener Dienst des intelligenten Teilnetzes 22 stellt eine Abfragemöglichkeit der Mailbox zu der Rufnummer der Telekommunikationseinrichtung 23 zur Verfügung. Die Abfrage der Mailbox erfolgt in der Regel über eine Kurzwahl, die für alle Benutzer identisch ist. Diese Kurzwahl kann zum Beispiel folgende Nummer sein: +49 171 5555. Der angebotene Dienst, der mit der Kurzwahl verknüpft ist, benötigt nun eine Übermittlung der Telefonnummer der Telekommunikationseinrichtung 23 zusammen mit einem Verbindungsaufbau, um die der Telekommunikationseinrichtung 23 mittels der Telefonnummer zugeordnete Mailbox zu identifizieren und einen Anrufer zu authentifizieren.

Andernfalls müsste die Telefonnummer der Telekommunikationseinrichtung 23 zusammen mit einer PIN-Nummer an den angebotenen Dienst übermittelt werden, nachdem die gewünschte Rufnummer und die PIN-Nummer mittels der Telekommunikationseinrichtung 23 von dem Anrufer erfasst worden sind. Da Anrufer ihre PIN-Nummer häufig nicht kennen, scheitert eine Abfrage der Mailbox in einem solchen Fall, wenn der Anrufer über das Teilnetz 21 (das kein intelligentes Teilnetz ist) eine Abfrage der Mailbox beginnt.

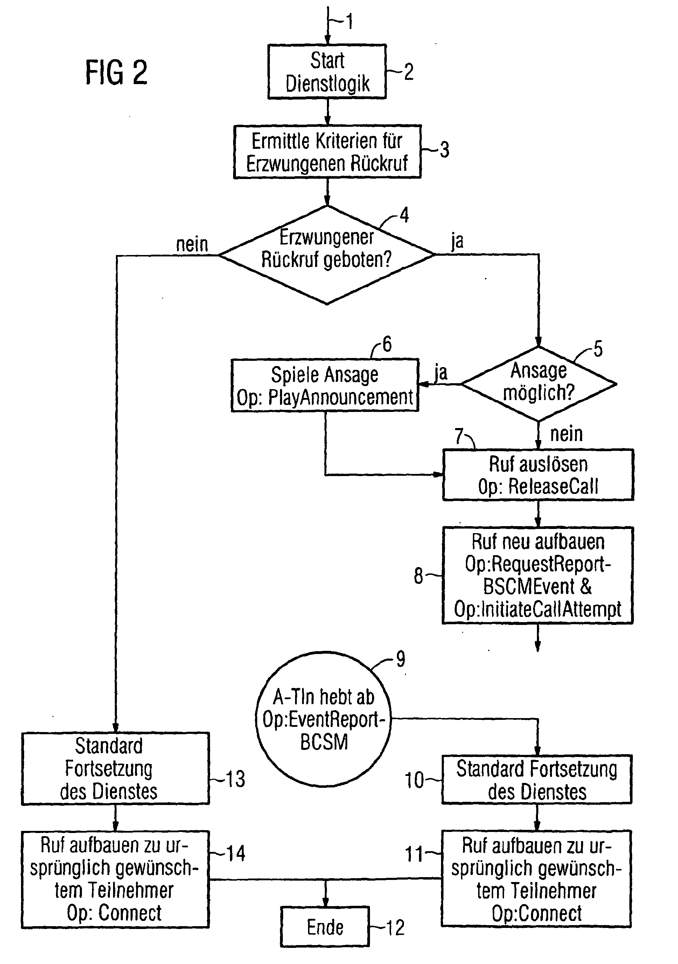

Der Ablauf eines Anrufs von der Telekommunikationseinrichtung 23 zu der Mailbox, die der Telefonnummer der Telekommunikationseinrichtung 23 zugeordnet ist, wird im folgenden anhand von Figur 2 erläutert. Von der Telekommunikationseinrichtung 23 wird ein Ruf zu einer gewünschten Rufnummer (CdPA - "Called Party Address") initiiert. Die gewünschte Rufnummer ist die Kurzwahlnummer (CdPA = +49 171 5555). Eine Vermittlungsstelle 24 (vgl. Fig. 1), über die ein Aufbau des Rufs gestartet wird, ist in diesem Ausführungsbeispiel Bestandteil eines Teilnetzes 21, welches kein intelligentes Teilnetz ist, und bei einem Verbindungsaufbau einer Sprechverbindung zu der gewünschten Rufnummer des intelligenten Teilnetzes wird die Telefonnummer der Telekommunikationseinrichtung 23 nicht mit Sicherheit zu dem Mailbox-Abfragedienst übermittelt. Möglich sind beispielsweise eine nicht vorgesehene Übermittlung oder der Fall, dass die Telefonnummer der Telekommunikationseinrichtung 23 beim Verbindungsaufbau verloren geht, zum Beispiel wegen Kommunikationsproblemen zwischen verschiedenen Telekommunikationsnetzen aus verschiedenen Staaten. Es ist jedoch sichergestellt, dass die Telefonnummer der Telekommunikationseinrichtung 23 in jedem Fall von der Vermittlungsstelle 24 an die mobile Dienstvermittlungsstelle 26 des intelligenten Teilnetzes 22 übertragen werden.

Nachdem von der Telekommunikationseinrichtung 23 der Ruf zu der gewünschten Rufnummer (CdPA = +49 171 5555) initiiert worden ist, werden erste Daten von der Dienstvermittlungsstelle 26 an eine Dienststeuereinrichtung 29 (SCP) des intelligenten Teilnetzes übermittelt, die dem Ruf zugeordnete Informationen, insbesondere die Telefonnummer der Telekommunikationseinrichtung 23, umfassen, was bedeutet, dass die zur Identifizierung der Telekommunikationseinrichtung 23 nutzbare Telefonnummer in jedem Fall bei der Dienststeuereinrichtung 29 ankommt, wohingegen eine Übermittlung der Telefonnummer beim Verbindungsaufbau zu der gewünschten Rufnummer des intelligenten Teilnetzes nicht vorgesehen ist oder wegen technischer Probleme unterbleibt.

Auf der Dienststeuereinrichtung 29 wird dann eine flexible Dienstlogik gestartet (vgl. Fig. 2, Bezugszeichen 2). Anschließend werden die ersten Daten analysiert 3. Die flexible Dienstlogik prüft anhand von festgelegten Kriterien, ob bei einem ersten Verbindungsaufbau des Rufs zu der gewünschten Rufnummer eine Ausführung eines Dienstes des intelligenten Netzes 22 ausgelöst (gestartet) werden wird. In diesem Ausführungsbeispiel stellt die flexible Dienstlogik anhand der von der Telekommunikationseinrichtung 23 angerufenen gewünschten Rufnummer "+49 171 5555" fest, dass der angebotene Dienst, der die Mailboxabfrage ermöglicht, genutzt werden soll. Zusätzlich kann die flexible Dienstlogik erkennen, dass ein erster Verbindungsaufbau des Rufs von einer Vermittlungsstelle 24 aus erfolgen soll, die vom Teilnetz 21 umfasst ist, welches bei der Abwicklung bestimmter Dienste Schwierigkeiten verursachen kann, und deshalb nicht sicherstellt, dass die Telefonnummer der Telekommunikationseinrichtung 23 mit dem ersten Verbindungsaufbau zu der gewünschten Rufnummer übermittelt wird. Die Telefonnummer der Telekommunikationseinrichtung 23 bildet zumindest einen Teil von zweiten Daten, die beim Verbindungsaufbau an die gewünschte Rufnummer übermittelt werden müssen, um die gewünschte Dienstleistung ausführen zu können.

Nun wird festgestellt, ob ein erzwungener Rückruf durchgeführt werden soll 4. Ein erzwungener Rückruf wird durchgeführt, falls die benötigten zweiten Daten bei dem ersten Verbindungsaufbau nicht an den über die gewünschte Rufnummer 25 erreichbaren Dienst übermittelt werden und somit eine Ausführung des Dienstes nicht oder nur unter erschwerten Bedingungen durchgeführt werden kann.

Hat die flexible Dienstlogik wie in diesem Ausführungsbeispiel erkannt, dass beim Verbindungsaufbau die zweiten Daten (hier die eine Telefonnummer der Telekommunikationseinrichtung 23) wahrscheinlich nicht an den Dienst übermittelt werden, so wird ein erzwungener Rückruf ausgeführt, wozu die von der Dienststeuereinrichtung 29 erhaltene Telefonnummer der Telekommunikationseinrichtung 23 genutzt wird. Zunächst wird hierbei geprüft 5, ob es möglich ist, der Telekommunikationseinrichtung 23 eine Ansage zu übermitteln. Ist dies möglich, so wird die Ansage an die Telekommunikationseinrichtung 23 übermittelt 6. Diese kann mittels einer Operation "Op:PlayAnnouncement" geschehen. Mittels der Ansage wird der Anrufer darüber informiert, dass von der flexiblen Dienststeuerung ein erzwungener Rückruf ausgelöst wird und der Ruf beendet wird. Somit wird der Anrufer in Kenntnis gesetzt, dass seine Dienstanforderung ausgeführt wird.

Nach dem Übermitteln der Ansage 6 bzw. für den Fall, dass eine Ansage nicht möglich ist, wird der Ruf ausgelöst (unterbrochen) 7. Dieses erfolgt in der Regel mit einer Operation "Op:ReleaseCall". Anschließend wird von der Dienststeuereinrichtung 29 ein Aufbau eines Rückrufs zu der Telekommunikationseinrichtung 23 über die mobile Dienstvermittlungsstelle 26 des intelligenten Teilnetzes 22 initiiert 8. Dazu werden insbesondere ein Befehl zum Ausführen einer Operation "Op:RequestReportBSCM-Event" und eine ICA-Nachricht (ICA - "Initiate Call Attempt") zum Ausführen einer Operation "Op:InitiateCallAttempt" an die mobile Dienstvermittlungsstelle 26 übermittelt. Der Befehl "Op:RequestReportBSCM-Event" sorgt dafür, dass die flexible Dienstlogik eine Antwort erhält, ob der initiierte Rückruf von der Telekommunikationseinrichtung 23 angenommen bzw. beantwortet ("answer") wird. Geht diese Antwort bei der flexiblen Dienstlogik innerhalb einer vorbestimmten Zeit ein 9, wird die Ausführung der flexiblen Dienstlogik fortgesetzt 10. Andernfalls wird die flexible Dienstlogik beendet und der Rückrufaufbau kontrolliert beendet.

Bei der Fortsetzung der Ausführung der flexiblen Dienstlogik 10 wird anschließend ein zweiter Verbindungsaufbau des Rückrufs zu der gewünschten Rufnummer 25 über die mobile Dienstvermittlungsstelle 26 des intelligenten Teilnetzes 22 initiiert 11. Dieses kann insbesondere mittels einer CONNECT-Nachricht zum Einleiten einer "Op:Connect"-Operation geschehen. Nachdem der Rückruf also eine Verbindung mittels der mobilen Dienstvermittlungsstelle 26 zwischen der Telekommunikationseinrichtung 23 und der gewünschten Rufnummer hergestellt hat, wird die flexible Dienstlogik beendet 12. Beim Verbindungsaufbau des Rückrufs zwischen der Telekommunikationseinrichtung 23 und der gewünschten Rufnummer 25 mittels der mobilen Dienstvermittlungsstelle 26 ist sichergestellt, dass die für die Ausführung des Dienstes notwendigen Informationen, das betrifft insbesondere die Telefonnummer der Telekommunikationseinrichtung 23, übermittelt werden, weil der Verbindungsaufbau des Rückrufs aus dem intelligenten Teilnetz 22 gestartet wird und von der Dienstvermittlungsstelle 26 alle notwendigen Informationen zu der gewünschten Rufnummer übermittelt werden, mit der der Rückrufdienst verknüpft ist.

Stellt die flexible Dienstlogik fest, dass ein erzwungener Rückruf nicht notwendig ist, da im ersten Verbindungsaufbau zwischen der Telekommunikationseinrichtung 23 und der gewünschten Rufnummer 25 die benötigten zweiten Daten mit Sicherheit übermittelt werden, so fährt die Dienstlogik mit der standardmäßigen Fortsetzung des Dienstes fort 13 und baut die erste Verbindung zu der gewünschten Rufnummer, insbesondere mittels eines CONNECT-Befehls zum Ausführen einer "Op:Connect"-Operation, auf 14. Anschließend wird auch in diesem Fall die flexible Dienstlogik beendet 12.

Bei dem Dienst, der bei dem Verbindungsaufbau des Rufs zu der gewünschten Rufnummer ausgeführt wird, kann es sich auch um andere Dienste handeln, wie zum Beispiel sogenannte Prepaid-Services, die dem Fachmann wohlbekannt sind und unter anderem die Abrechnung von Anrufen mittels vorausbezahlter Telefonkarten (Prepaid Cards) abwickeln. Bei den zweiten Daten, deren Übermittlung bei dem Verbindungsaufbau zu der gewünschten Rufnummer sichergestellt werden muss, um eine korrekte bzw. bequeme Ausführung des Dienstes zu ermöglichen, kann es sich auch um andere Informationen als die Telefonnummer der Telekommunikationseinrichtung 23 handeln.

## Patentansprüche

1. Verfahren zum Ausführen eines erzwungenen Rückrufs in einem Telekommunikationsnetz mit:
- einer Telekommunikationseinrichtung (23), insbesondere einem Mobiltelefon, mit einer Telefonnummer und
- mindestens einem intelligenten Teilnetz (22), welches eine mobile Dienstvermittlungsstelle (26) und eine Dienststeuereinrichtung (29) aufweist,
wobei das Verfahren die folgenden Schritte umfasst:
- Initiieren eines Rufs von der Telekommunikationseinrichtung (23) zu einer gewünschten Rufnummer (25) in dem intelligenten Teilnetz (22),
- Übermitteln von ersten Daten (1), die dem Ruf zugeordnet sind und Informationen über den Ruf, insbesondere die Telefonnummer der Telekommunikationseinrichtung (23), umfassen, von der Dienstvermittlungsstelle (26) an die Dienststeuereinrichtung (29),
- Analysieren der ersten Daten (3, 4) in der Dienststeuereinrichtung (29) daraufhin, ob mit dem Ruf zu der gewünschten Rufnummer ein Dienst des intelligenten Teilnetzes (22) genutzt werden soll, und falls dieses der Fall ist,
- Initiieren eines Aufbaus eines Rückrufs (8) zu der Telekommunikationseinrichtung (23) über die mobile Dienstvermittlungsstelle (26) unter Berücksichtigung der mit den ersten Daten übermittelten Telefonnummer der Telekommunikationseinrichtung (23); und
- Initiieren eines zweiten Verbindungsaufbaus des Rückrufs zu der gewünschten Rufnummer (25) über die mobile Dienstvermittlungsstelle (26).

2. Verfahren nach Anspruch 1, **dadurch gekennzeichnet, dass** vor dem Initiieren des Aufbaus des Rückrufs der Ruf ausgelöst wird (7).

3. Verfahren nach Anspruch 2, **dadurch gekennzeichnet, dass** vor dem Auslösen des Rufs der Telekommunikationseinrichtung (23) eine Nachricht, insbesondere eine Ansage, übermittelt wird (6).

4. Verfahren nach einem der Ansprüche 1 bis 3, **dadurch gekennzeichnet, dass** das Initiieren des Aufbaus der zweiten Verbindung des Rückrufs erst erfolgt, wenn der Rückruf von der Telekommunikationseinrichtung (23) angenommen wurde (9).

5. Verfahren nach einem der vorangegangenen Ansprüche, **dadurch gekennzeichnet, dass** das Analysieren der ersten Daten (3, 4) in einer flexiblen Dienstlogik erfolgt, die auf der Dienststeuereinrichtung (29) ausgeführt wird.

6. Verfahren nach Anspruch 4, **dadurch gekennzeichnet, dass** die flexible Dienstlogik vor dem Initiieren (11) des Aufbaus der zweiten Verbindung des Rückrufs weitere Verfahrensschritte ausführt (10), nachdem der Rückruf von der Telekommunikationseinrichtung (23) angenommen wurde (9).

7. Verfahren nach einem der vorangegangenen Ansprüche, **dadurch gekennzeichnet, dass** das Initiieren des Aufbaus des Rückrufs (8) mittels einer Initiate-Call-Attempt-Nachricht erfolgt.

8. Verfahren nach einem der vorangegangenen Ansprüche, **dadurch gekennzeichnet, dass** das Initiieren des zweiten Verbindungsaufbaus (11) mittels einer CONNECT-Nachricht erfolgt.

## Claims

1. Method for performing a forced call-back in a telecommunication network comprising:
- a telecommunication facility (23), particularly a mobile telephone, with a telephone number, and
- at least one intelligent subnetwork (22) which exhibits a mobile service switching point (26) and a service control point (29),
the method comprising the following steps:
- initiating a call from the telecommunication facility (23) to a required directory number (25) in the intelligent subnetwork (22),
- transmitting first data (1) which are associated with the call and comprise information on the call, particularly the telephone number of the telecommunication facility (23) from the service switching point (26) to the service control point (29),
- analysing the first data (3, 4) in the service control point (29) to see whether a service of the intelligent subnetwork (22) is to be utilized with the call to the required directory number, and if this is the case,
- initiating a setting-up of a call-back (8) to the telecommunication facility (23) via the mobile service switching point (26), taking into consideration the telephone number of the telecommunication facility (23) transmitted together with the first data; and
- initiating a second connection set-up of the call-back to the required directory number (25) via the mobile service switching point (26).

2. Method according to Claim 1, **characterized in that** the call is terminated before the setting-up of the call-back is initiated (7).

3. Method according to Claim 2, **characterized in that**, before the call of the telecommunication facility (23) is terminated, a message is transmitted, particularly an announcement (6).

4. Method according to one of Claims 1 to 3, **characterized in that** the setting-up of the second connection of the call-back is only initiated when the call-back has been answered by the telecommunication facility (23) (9).

5. Method according to one of the preceding claims, **characterized in that** the first data (3, 4) are analysed in a flexible service logic which is executed at the service control point (29).

6. Method according to Claim 4, **characterized in that** the flexible service logic, before initiating (11) the setting-up of the second connection of the call-back, executes further method steps (10) after the call-back has been answered by the telecommunication facility (23) (9).

7. Method according to one of the preceding claims, **characterized in that** the setting-up of the call-back (8) is initiated by means of an Initiate Call Attempt message.

8. Method according to one of the preceding claims, **characterized in that** the second connection set-up is initiated (11) by means of a CONNECT message.

## Revendications

1. Procédé pour exécuter un rappel imposé dans un réseau de télécommunication comportant :
- un dispositif de télécommunication (23), notamment un téléphone mobile, avec un numéro de téléphone et
- au moins un sous-réseau intelligent (22) qui comporte un centre de commutation de service mobile (26) et un dispositif de commande de service (29),
le procédé comprenant les étapes suivantes :
- déclenchement d'un appel par le dispositif de télécommunication (23) vers un numéro d'appel souhaité (25) dans le sous-réseau intelligent (22),
- transmission de premières données (1), qui sont associées à l'appel et qui comprennent des informations sur l'appel, notamment le numéro de téléphone du dispositif de télécommunication (23), du centre de commutation de service (26) au dispositif de commande de service (29),
- analyse des premières données (3, 4) dans le dispositif de commande de service (29) pour savoir si, avec l'appel vers le numéro d'appel souhaité, un service du sous-réseau intelligent (22) doit être utilisé et, si c'est le cas,
- déclenchement d'un établissement de liaison pour un rappel (8) vers le dispositif de télécommunication (23) par l'intermédiaire du centre de commutation de service mobile (26) en tenant compte du numéro de téléphone attribué au dispositif de télécommunication (23) et transmis avec les premières données ; et
- déclenchement d'un deuxième établissement de liaison pour le rappel vers le numéro d'appel souhaité (25) par l'intermédiaire du centre de commutation de service mobile (26).

2. Procédé selon la revendication 1, **caractérisé par le fait que**, avant le déclenchement de l'établissement de liaison pour le rappel, l'appel est libéré (7).

3. Procédé selon la revendication 2, **caractérisé par le fait que**, avant la libération de l'appel du dispositif de télécommunication (23), un message, notamment une annonce, est transmis (6).

4. Procédé selon l'une des revendications 1 à 3, **caractérisé par le fait que** le déclenchement de l'établissement de la deuxième liaison du rappel s'effectue seulement lorsque le rappel a été accepté (9) par le dispositif de télécommunication (23).

5. Procédé selon l'une des revendications précédentes, **caractérisé par le fait que** l'analyse des premières données (3, 4) s'effectue dans une unité logique de service flexible qui est réalisée sur le dispositif de commande de service (29).

6. Procédé selon la revendication 4, **caractérisé par le fait que**, avant le déclenchement (11) de l'établissement de la deuxième liaison du rappel, l'unité logique de service flexible exécute (10) d'autres étapes de procédé après que le rappel a été accepté (9) par le dispositif de télécommunication (23).

7. Procédé selon l'une des revendications précédentes, **caractérisé par le fait que** le déclenchement de l'établissement du rappel (8) s'effectue au moyen d'un message Initiate-Call-Attempt.

8. Procédé selon l'une des revendications précédentes, **caractérisé par le fait que** le déclenchement du deuxième établissement de liaison (11) s'effectue au moyen d'un message CONNECT.
